# EUROPEAN PATENT SPECIFICATION

(11) **EP 4 361 470 B1**
(45) Date of publication and mention of the grant of the patent: **29.04.2026**
(21) Application number: 22851665.4
(22) Date of filing: 16.05.2022
(51) Int. Cl.: F16H 57/04

(54) **COOLING AND LUBRICATION APPARATUS OF ELECTRICAL DRIVE ASSEMBLY**
KÜHL- UND SCHMIERVORRICHTUNG EINER ELEKTRISCHEN ANTRIEBSANORDNUNG
APPAREIL DE REFROIDISSEMENT ET DE LUBRIFICATION D'ENSEMBLE D'ENTRAÎNEMENT ÉLECTRIQUE

(30) Priority: 03.08.2021 CN 202110887039
(43) Date of publication of application: 01.05.2024
(73) Proprietor: Jing-Jin Electric Technologies Co., Ltd., Beijing 100015 (CN)
(72) Inventor: LI, Jianwen, Beijing 100015 (CN); LIU, Yang, Beijing 100015 (CN); PAN, Fayu, Beijing 100015 (CN)
(74) Representative: Schwarz & Partner Patentanwälte GmbH
(86) International application number: PCT/CN2022/093089
(87) International publication number: WO 2023/010947

(56) References cited:
- WO-A1-2016/174984
- CN-A- 107 131 292
- CN-A- 110 212 701
- CN-A- 111 379 845
- CN-A- 112 421 889
- CN-A- 112 594 357
- CN-A- 113 442 861
- CN-U- 210 440 562
- JP-A- 2011 189 919
- US-A1- 2013 145 879
- US-B2- 9 257 884

## Description

### CROSS REFERENCING OF RELATED APPLICATIONS

This application claims priority from the Chinese patent application No. 202110887039.X filed with the Chinese Patent Office on August 3, 2021 and entitled "COOLING AND LUBRICATION APPARATUS OF ELECTRICAL DRIVE ASSEMBLY AND ELECTRICAL DRIVE AS SEMBLY".

### TECHNICAL FIELD

The present invention belongs to the technical field of cooling and lubrication of an electric drive assembly, and particularly relates to a cooling and lubrication device of an electric drive assembly and an electric drive assembly.

### BACKGROUND

With the continuous development of new energy vehicles, the requirements for their safety, power, energy consumption, noise and other related performance are becoming increasingly high. In order to adapt to various complex road conditions, the electric drive assembly of automobiles needs to have technical characteristics such as high power, high torque, high speed, and high efficiency. At the same time, higher demands are put forward for the lubrication and cooling of the motor and reducer in the electric drive assembly.

At present, the lubrication and cooling of the reducer of the electric drive assembly in automobiles are usually realized by stirring the lubricating oil inside the housing with a gear to make it splash. The lubricating oil of the reducer flows or splashes to friction pairs of rotating parts such as gears, bearings, and oil seals for passive lubrication. The lubricating oil flows and takes away the heat generated during the operation of the rotating parts, thereby achieving passive cooling. However, this passive splash lubrication and cooling method cannot provide sufficient lubrication and timely removal of the large amount of heat generated by the reducer during high speed and high torque output. In addition, the cooling of motor is realized by making the coolant flow through the water passage on the stator housing to take away the heat generated during the operation of the motor. This conventional cooling method can only reduce or stabilize the temperature at a local area of the motor. However, the temperature of the motor coil and rotor inside the motor is much higher than the temperature of the stator. Due to the limitations of the motor structure and conventional cooling methods, the heat generated by the motor under long-term, high power, high torque, high speed operating conditions cannot be fully and quickly taken away.

Document US2013/145879 A1, according to its abstract, discloses a power transmission device including a partition wall dividing an oil reservoir into a first oil reservoir in which a final gear is accommodated and a second oil reservoir in which the final gear is not accommodated, an oil passage passing a lubrication oil to a bearing of a rotor shaft, to a bearing of an input shaft and to a reduction mechanism, an oil pump connected to the oil passage via an outlet port, and communicated with the second oil reservoir via an inlet port, a third oil reservoir provided at a position lower than the rotor shaft and receiving the lubrication oil at a position upper than the second oil reservoir, and a gutter-shaped member tilted so as to communicate with the third oil reservoir at an upper end and the second oil reservoir at an lower end, and crossing through or over the partition wall.

Document US 9 257 884 B2, according to its abstract, discloses a cooling system for a geared motor, and a geared motor having electric motors and a gear unit as well as an adapter which is disposed between the electric motors and the gear unit, the electric motors having ducts for a coolant, in particular, a coolant, especially a cooling liquid, being able to flow through each of the motors which, in particular, are liquid-cooled, the streams of coolant emerging from the ducts being brought together and being fed at least proportionally by a first distributor to the gear unit in order to lubricate and cool the toothing parts of the gear unit.

### SUMMARY

With respect to the above problems, the present invention provides a cooling and lubrication device of an electric drive assembly and an electric drive assembly in order to overcome or at least partially solve the above problems.

In order to achieve the above object, the present invention adopts the following technical solutions.

According to the invention a cooling and lubrication device of an electric drive assembly is provided.

The electric drive assembly comprises a motor unit and a reducer unit, the motor unit comprises a motor housing, and the reducer unit comprises a reducer housing;
the cooling and lubrication device comprises an oil pumping unit, an oil pumping passage, and an oil returning passage;
the oil pumping passage comprises several oil distribution passages, and positions of outlets of oil distribution passages correspond to parts to be cooled and parts to be lubricated inside the motor housing, as well as parts to be cooled and parts to be lubricated inside the reducer housing;
the oil pumping unit comprises an oil inlet and an oil outlet, the oil inlet is communicated with a first housing, the oil outlet is communicated with the oil pumping passage, and the oil pumping unit is used to pump the lubricating oil inside the first housing into the oil pumping passage, and transfer the lubricating oil to the parts to be cooled and the parts to be lubricated through the oil distribution passages;
the oil returning passage is provided at the bottom of a second housing to allow the lubricating oil inside the second housing to flow back into the first housing;
the first housing is the motor housing, and the second housing is the reducer housing; alternatively, the first housing is the reducer housing, and the second housing is the motor housing.

Further, the cooling and lubrication device further comprises an oil filtering unit;
the oil filtering unit is provided at the bottom of the first housing and used to filter the lubricating oil.

Further, the oil filtering unit can be a detachable oil filter.

Further, the cooling and lubrication device according to the invention further comprises a cooler unit;
the cooler unit is provided on an oil passage between the oil pumping unit and the oil filtering unit or between the oil filtering unit and the first housing, and is used to cool the lubricating oil inside the oil passage.

Further, the oil pumping unit may comprise a mechanical oil pump;
the mechanical oil pump is provided inside the reducer housing and is connected to the reducer unit for transmission.

Further, the reducer unit further may comprise an intermediate shaft;
the mechanical oil pump is connected to the intermediate shaft for transmission.

Further, the oil pumping unit may comprise an electronic oil pump and an electronic control unit;
the electronic oil pump is provided at a bottom of the motor housing or the reducer housing, and the electronic control unit is used to control operation of the electronic oil pump.

Further, the oil pumping unit further may comprise several temperature sensors;
the temperature sensors are provided inside the motor housing and/or the reducer housing, and the electronic control unit controls operation of the electronic oil pump based on a temperature detected by the temperature sensors.

Further, the oil pumping unit may comprise comprises a rotational speed sensor;
the rotational speed sensor is used to detect a rotational speed of a motor or a reducer and transfer the detected rotational speed to the electronic control unit, and the electronic control unit controls operation of the electronic oil pump based on the rotational speed of the motor or the reducer.

The electric drive assembly uses any of the cooling and lubrication devices as described above for cooling and lubrication of the motor and the reducer.

The advantages and beneficial effects of the present invention are as follows.

In the cooling and lubrication device of the present invention, by providing the oil pumping unit and several oil distribution passages, and making the positions of outlets of oil distribution passages respectively correspond to the parts to be cooled and the parts to be lubricated inside the motor housing as well as the parts to be cooled and the parts to be lubricated inside the reducer housing, the lubricating oil is pumped into the oil pumping passage from the reducer housing or the motor housing by the oil pumping unit, and transferred to the parts to be cooled and the parts to be lubricated through the oil distribution passages, thereby achieving active and directional cooling and lubrication of the parts to be cooled and the parts to be lubricated. The cooling and lubrication efficiency is higher Moreover, the cooling and lubrication device realizes the integration of cooling and lubrication of the motor and the reducer, thereby making the electric drive assembly structure more compact.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present invention. Moreover, throughout the drawings, the same reference numerals are used to denote the same components. In the drawings:
FIG. 1 is a schematic diagram of the structure of a cooling and lubrication device of an electric drive assembly according to an embodiment of the present invention; and
FIG. 2 is a schematic diagram of the structure of another cooling and lubrication device of an electric drive assembly according to an embodiment of the present invention.

In the drawings: 1. oil distribution passage; 2. oil inlet; 3. oil outlet; 4. oil passage; 5. intermediate shaft.

### DETAILED DESCRIPTION

In order to make the object, technical solutions, and advantages of the present invention clearer, the present invention will be described clearly and completely in conjunction with the specific embodiments and corresponding drawings. Obviously, the embodiments described are only part of rather than all of the embodiments of the present invention.

The technical solutions provided in embodiments of the present invention will be explained in detail below in conjunction with the accompanying drawings.

In an embodiment of the present invention, a cooling and lubrication device of an electric drive assembly is disclosed. The electric drive assembly comprises a motor unit and a reducer unit, the motor unit comprises a motor housing, the reducer unit comprises a reducer housing, and the reducer housing is provided at a rear end of the motor housing. The cooling and lubrication device comprises an oil pumping unit, an oil pumping passage, and an oil returning passage.

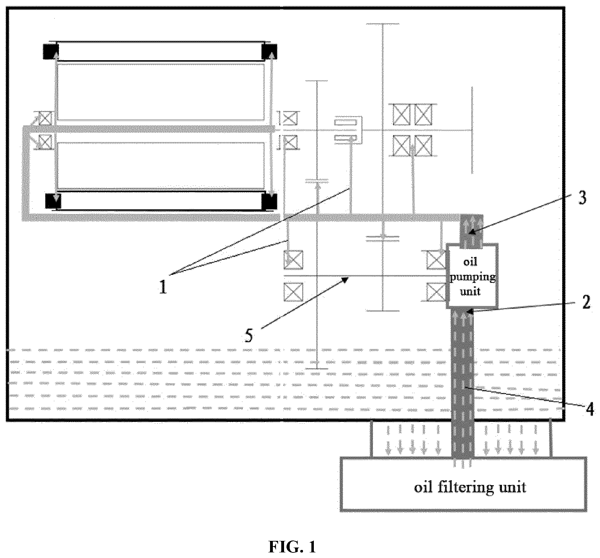

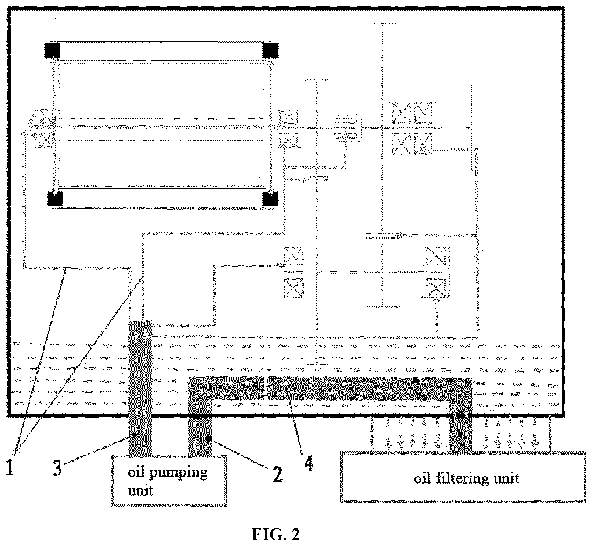

As shown in FIGS. 1 to 2, the oil pumping passage comprises several oil distribution passages 1. The oil distribution passages 1 may be oil pipes or oil paths. When the oil distribution passage 1 is an oil path, the oil path may be directly formed by casting on the motor housing and the reducer housing. The positions of outlets of oil distribution passages 1 correspond respectively to the parts to be cooled and the parts to be lubricated inside the motor housing as well as the parts to be cooled and the parts to be lubricated inside the reducer housing.

The oil pumping unit comprises an oil inlet 2 and an oil outlet 3. The oil inlet 2 is communicated with a first housing, so that the lubricating oil in the first housing can enter the oil pumping unit through the oil inlet 2. The oil outlet 3 is communicated with the oil pumping passage. The oil pumping unit pumps the lubricating oil in the first housing into the oil pumping passage and transfers it to the parts to be cooled and the parts to be lubricated through the oil distribution passages 1, thereby achieving targetedly cooling of the parts to be cooled and lubrication of the parts to be lubricated. The parts to be cooled include bearings, gears, motor coils, motor rotors, etc. The parts to be lubricated include bearings, gears, oil seals, etc.

For example, the positions of outlets of one or more oil distribution passages 1 correspond to the motor coil, thereby achieving directional and active cooling of the motor coil by lubricating oil, timely and quickly removing the heat generated during the operation of the motor coil, avoiding or reducing early failure of the entire vehicle due to the high working temperature of the motor under special working conditions, and improving the power density and overall efficiency of the motor.

The oil returning passage is provided at the bottom of the second housing, so that the lubricating oil inside the second housing can flow back into the first housing.

The first housing is the motor housing, and the second housing is the reducer housing. Alternatively, the first housing is the reducer housing, and the second housing is the motor housing. The height of a bottom of the first housing is lower than the height of a bottom of the second housing.

When the first housing is the reducer housing and the second housing is the motor housing, the flow path of lubricating oil inside the reducer housing is as follows. The lubricating oil at the bottom of the reducer housing is pumped into the oil pumping passage through the oil pumping unit, and then transferred to the parts to be cooled and the parts to be lubricated inside the reducer housing through oil distribution passages 1. After completing lubrication and cooling, the lubricating oil returns to the bottom of the reducer housing due to gravity. The flow path of lubricating oil inside the motor housing is as follows. The lubricating oil at the bottom of the reducer housing is pumped into the oil pumping passage through the oil pumping unit, and then transferred to the parts to be cooled and the parts to be lubricated inside the motor housing through oil distribution passages 1. After completing lubrication and cooling, the lubricating oil returns to the bottom of the motor housing due to gravity, and finally returns to the reducer housing through the oil returning passage.

In sum, in the cooling and lubrication device of this embodiment, by providing the oil pumping unit and several oil distribution passages, and making the positions of outlets of oil distribution passages respectively correspond to the parts to be cooled and the parts to be lubricated inside the motor housing as well as the parts to be cooled and the parts to be lubricated inside the reducer housing, the lubricating oil is pumped into the oil pumping passage from the reducer housing or the motor housing by the oil pumping unit, and transferred to the parts to be cooled and the parts to be lubricated through the oil distribution passages, thereby achieving active and directional cooling and lubrication of the parts to be cooled and the parts to be lubricated. The cooling and lubrication efficiency is higher. The cooling and lubrication device can meet the cooling and lubrication needs of the vehicle electric drive assembly that works with long-term, high power, high torque, high speed under various working conditions, and increases the reliability of the vehicle. Moreover, the cooling and lubrication device realizes the integration of cooling and lubrication of the motor and the reducer, thereby making the electric drive assembly structure more compact and less space-occupying.

In an embodiment, as shown in FIGS. 1 to 2, the cooling and lubrication device further comprises an oil filtering unit.

The oil filtering unit is provided at the bottom of the first housing for filtering lubricating oil. Before entering the oil pumping unit, the lubricating oil inside the first housing can be filtered by the oil filtering unit to remove particles in the lubricating oil, prevent the particles from blocking the oil distribution passage 1 and affecting the normal operation of the motor and the reducer. The oil filtering unit is provided at the bottom of the first housing, which can not only fully utilize the space at the bottom of the first housing, but also allow the lubricating oil at the bottom of the first housing to enter the oil filtering unit for filtration under the action of gravity.

Furthermore, in order to prevent the deterioration of filtration effect of the oil filtering unit caused by long-term use, the oil filtering unit may be a detachable oil filter, and the filtration effect of the oil filtering unit can be ensured by replacing a filter element.

In an embodiment, in order to further enhance the cooling effect on the electric drive assembly, the cooling and lubrication device further comprises a cooler unit.

The cooler unit is provided on the oil passage 4 that is between the oil pumping unit and the oil filtering unit or between the oil filtering unit and the first housing, and is used to cool the lubricating oil inside the oil passage 4. Circulating coolant can be provided inside the cooler unit, and the heat exchange between the lubricating oil in passage 4 and the coolant is achieved through the cooler unit, taking away the heat inside the electric drive assembly and further improving the heat dissipation performance of the electric drive assembly.

In an embodiment, the oil pumping unit comprises a mechanical oil pump.

The mechanical oil pump is provided inside the reducer housing and connected to the reducer unit for transmission. When the reducer rotates, it can directly drive the mechanical oil pump to work without need for an additional control unit. The cost of the mechanical oil pump is also low.

In an embodiment, as shown in FIG. 1, the reducer unit further comprises an intermediate shaft 5.

The mechanical oil pump is connected to the intermediate shaft 5 for transmission, and the rotational speed of the mechanical oil pump is controlled through the intermediate shaft 5.

In an or some embodiments, the oil pumping unit comprises an electronic oil pump and an electronic control unit.

The electronic oil pump is provided at the bottom of the motor housing or the reducer housing to save space, and the electronic control unit can control the operation of the electronic oil pump as needed.

In an or some embodiments, the oil pumping unit further comprises several temperature sensors.

The temperature sensors are provided inside the motor housing and/or the reducer housing, and transfer the detected temperatures to the electronic control unit. The electronic control unit controls the operation of the electronic oil pump based on the temperatures detected by the temperature sensors. For example, a temperature sensor is provided at the motor coil to detect the temperature of the motor coil. When the temperature of the motor coil reaches a certain value, the control unit controls the electronic oil pump to pump the lubricating oil to the motor coil, thereby achieving the cooling of the motor coil.

In an or some embodiments, the oil pumping unit further comprises a rotational speed sensor.

The rotational speed sensor is used to detect the rotational speed of the motor or the reducer, and transfers the detected speed to the electronic control unit. The electronic control unit controls the operation of the electronic oil pump based on the rotational speed of the motor or the reducer. Namely, when the rotational speed of the motor or the reducer exceeds a preset value, the electronic control unit controls the electronic oil pump to work, thereby achieving the cooling and lubrication of the electric drive assembly.

In an embodiment of the present invention, an electric drive assembly is disclosed. The electric drive assembly uses the cooling and lubrication device as describe in any of the above embodiments for cooling and lubrication of the motor and the reducer. The electric drive assembly has the advantages of good cooling and lubrication performance, and can achieve high torque and high rotational speed output.

The above merely describes particular embodiments of the present invention. By the teaching of the present invention, a person skilled in the art can make other modifications or variations based on the above embodiments. A person skilled in the art should appreciate that, the detailed description above is only for the purpose of better explaining the present invention, and the scope of protection is defined by the appended claims.

## Claims

1. An electric drive assembly, the electric drive assembly comprises a cooling and lubrication device, a motor unit and a reducer unit, the motor unit comprises a motor housing, and the reducer unit comprises a reducer housing,
the cooling and lubrication device comprises an oil pumping unit, an oil pumping passage, and an oil returning passage;
the oil pumping passage comprises several oil distribution passages (1), and positions of outlets of oil distribution passages (1) correspond to parts to be cooled and parts to be lubricated inside the motor housing, as well as parts to be cooled and parts to be lubricated inside the reducer housing;
the oil pumping unit comprises an oil inlet (2) and an oil outlet (3), the oil inlet (2) is communicated with a first housing, the oil outlet (3) is communicated with the oil pumping passage, and the oil pumping unit is used to pump the lubricating oil inside the first housing into the oil pumping passage, and transfer the lubricating oil to the parts to be cooled and the parts to be lubricated through the oil distribution passages (1);
the oil returning passage is provided at the bottom of a second housing to allow the lubricating oil inside the second housing to flow back into the first housing;
the first housing is the motor housing, and the second housing is the reducer housing; alternatively, the first housing is the reducer housing, and the second housing is the motor housing, **characterized in that**
the cooling and lubrication device further comprises an oil filtering unit and a cooler unit; and
the oil filtering unit is provided at the bottom of the first housing and used to filter the lubricating oil,
the cooler unit is provided on an oil passage (4) between the oil filtering unit and the first housing, and is used to cool the lubricating oil inside the oil passage (4).

2. The electric drive assembly according to claim 1, **characterized in that**: the oil filtering unit is a detachable oil filter.

3. The electric drive assembly according to claim 1, **characterized in that**: the oil pumping unit comprises a mechanical oil pump; and
the mechanical oil pump is provided inside the reducer housing and is connected to the reducer unit for transmission.

4. The electric drive assembly according to claim 3, **characterized in that**: the reducer unit further comprises an intermediate shaft (5); and
the mechanical oil pump is connected to the intermediate shaft (5) for transmission.

5. The electric drive assembly according to any one of claims 1-4, **characterized in that**: the oil pumping unit comprises an electronic oil pump and an electronic control unit; and
the electronic oil pump is provided at a bottom of the motor housing or the reducer housing, and the electronic control unit is used to control operation of the electronic oil pump.

6. The electric drive assembly according to claim 5, **characterized in that**: the oil pumping unit further comprises several temperature sensors; and
the temperature sensors are provided inside the motor housing and/or the reducer housing, and the electronic control unit controls operation of the electronic oil pump based on a temperature detected by the temperature sensors.

7. The electric drive assembly according to claim 5, **characterized in that**: the oil pumping unit further comprises a rotational speed sensor; and
the rotational speed sensor is used to detect a rotational speed of a motor or a reducer and transfer a detected rotational speed to the electronic control unit, and the electronic control unit controls operation of the electronic oil pump based on the rotational speed of the motor or the reducer.

## Patentansprüche

1. Eine elektrische Antriebsbaugruppe, wobei die elektrische Antriebsbaugruppe eine Kühl- und Schmiervorrichtung, eine Motoreinheit und eine Untersetzungsgetriebeeinheit umfasst, wobei die Motoreinheit ein Motorgehäuse umfasst und die Untersetzungsgetriebeeinheit ein Untersetzungsgetriebegehäuse umfasst,
die Kühl- und Schmiervorrichtung umfasst eine Ölpumpeneinheit, einen Ölpumpenkanal und einen Ölrücklaufkanal;
der Ölpumpkanal umfasst mehrere Ölverteilungskanäle (1), und die Positionen der Auslässe der Ölverteilungskanäle (1) entsprechen den zu kühlenden und zu schmierenden Teilen im Inneren des Motorgehäuses sowie den zu kühlenden und zu schmierenden Teilen im Inneren des Getriebegehäuses;
die Ölpumpeneinheit umfasst einen Öleinlass (2) und einen Ölauslass (3), der Öleinlass (2) ist mit einem ersten Gehäuse verbunden, der Ölauslass (3) ist mit dem Ölpumpkanal verbunden, und die Ölpumpeneinheit dient dazu, das Schmieröl im Inneren des ersten Gehäuses in den Ölpumpkanal zu pumpen und das Schmieröl über die Ölverteilungskanäle (1);
der Ölrücklaufkanal ist am Boden eines zweiten Gehäuses vorgesehen, damit das Schmieröl im Inneren des zweiten Gehäuses in das erste Gehäuse zurückfließen kann;
das erste Gehäuse das Motorgehäuse und das zweite Gehäuse das Gehäuse des Untersetzungsgetriebes ist; alternativ ist das erste Gehäuse das Gehäuse des Untersetzungsgetriebes und das zweite Gehäuse das Motorgehäuse, **dadurch gekennzeichnet, dass**
die Kühl- und Schmiervorrichtung ferner eine Ölfiltereinheit und eine Kühleinheit umfasst; und
die Ölfiltereinheit am Boden des ersten Gehäuses vorgesehen ist und zum Filtern des Schmieröls dient,
die Kühleinheit an einem Ölkanal (4) zwischen der Ölfiltereinheit und dem ersten Gehäuse vorgesehen ist und zum Kühlen des Schmieröls im Ölkanal (4) dient.

2. Elektrische Antriebsbaugruppe nach Anspruch 1, **dadurch gekennzeichnet, dass**: die Ölfiltereinheit ein abnehmbarer Ölfilter ist.

3. Elektrische Antriebsbaugruppe nach Anspruch 1, **dadurch gekennzeichnet, dass**: die Ölpumpeneinheit eine mechanische Ölpumpe umfasst; und
die mechanische Ölpumpe innerhalb des Gehäuses des Untersetzungsgetriebes vorgesehen und zur Kraftübertragung mit der Getriebeeinheit verbunden ist.

4. Elektrische Antriebsbaugruppe nach Anspruch 3, **dadurch gekennzeichnet, dass**: die Untersetzungsgetriebeeinheit ferner eine Zwischenwelle (5) umfasst; und
die mechanische Ölpumpe zur Kraftübertragung mit der Zwischenwelle (5) verbunden ist.

5. Elektrische Antriebsbaugruppe nach einem der Ansprüche 1 bis 4, **dadurch gekennzeichnet, dass**: die Ölpumpeneinheit eine elektronische Ölpumpe und eine elektronische Steuereinheit umfasst; und
die elektronische Ölpumpe an einer Unterseite des Motorgehäuses oder des Gehäuses des Untersetzungsgetriebes vorgesehen ist und die elektronische Steuereinheit zur Steuerung des Betriebs der elektronischen Ölpumpe verwendet wird.

6. Elektrische Antriebsbaugruppe nach Anspruch 5, **dadurch gekennzeichnet, dass**: die Ölpumpeneinheit ferner mehrere Temperatursensoren umfasst; und
die Temperatursensoren im Inneren des Motorgehäuses und/oder des Gehäuses des Untersetzungsgetriebes vorgesehen sind und die elektronische Steuereinheit den Betrieb der elektronischen Ölpumpe auf der Grundlage einer von den Temperatursensoren erfassten Temperatur steuert.

7. Elektrische Antriebsbaugruppe nach Anspruch 5, **dadurch gekennzeichnet, dass**: die Ölpumpeneinheit ferner einen Drehzahlsensor umfasst; und
der Drehzahlsensor dient dazu, die Drehzahl eines Motors oder eines Untersetzungsgetriebes zu erfassen und die erfasste Drehzahl an die elektronische Steuereinheit zu übertragen, wobei die elektronische Steuereinheit den Betrieb der elektronischen Ölpumpe auf der Grundlage der Drehzahl des Motors oder des Untersetzungsgetriebes steuert.

## Revendications

1. Ensemble d'entraînement électrique, l'ensemble d'entraînement électrique comprenant un dispositif de refroidissement et de lubrification, une unité de moteur et une unité de réducteur, l'unité de moteur comprenant un carter moteur, et l'unité de réducteur comprenant un carter réducteur,
le dispositif de refroidissement et de lubrification comprenant une unité de pompage d'huile, un conduit de pompage d'huile et un conduit de retour d'huile;
le conduit de pompage d'huile comprenant plusieurs conduits de distribution d'huile (1), et les positions des sorties des conduits de distribution d'huile (1) correspondant aux pièces à refroidir et aux pièces à lubrifier à l'intérieur du carter moteur, ainsi qu'aux pièces à refroidir et aux pièces à lubrifier à l'intérieur du carter réducteur;
l'unité de pompage d'huile comprenant une entrée d'huile (2) et une sortie d'huile (3), l'entrée d'huile (2) étant en communication avec un premier carter, la sortie d'huile (3) étant en communication avec le conduit de pompage d'huile, et l'unité de pompage d'huile étant utilisée pour pomper l'huile de lubrification à l'intérieur du premier carter dans le conduit de pompage d'huile et pour acheminer l'huile de lubrification vers les pièces à refroidir et vers les pièces à lubrifier à travers les conduits de distribution d'huile (1);
le conduit de retour d'huile étant prévu au fond d'un second carter pour permettre à l'huile de lubrification à l'intérieur du second carter de refluer dans le premier carter;
le premier carter étant le carter moteur, et le second carter étant le carter réducteur; ou bien le premier carter étant le carter réducteur, et le second carter étant le carter moteur, **caractérisé en ce que**
le dispositif de refroidissement et de lubrification comprend en outre une unité de filtrage d'huile et une unité de refroidissement; et
l'unité de filtrage d'huile est prévue au fond du premier carter et est utilisée pour filtrer l'huile de lubrification;
l'unité de refroidissement est prévue sur un conduit d'huile (4) entre l'unité de filtrage d'huile et le premier carter et est utilisée pour refroidir l'huile de lubrification à l'intérieur du conduit d'huile (4).

2. Ensemble d'entraînement électrique selon la revendication 1, **caractérisé en ce que** l'unité de filtrage d'huile est un filtre à huile amovible.

3. Ensemble d'entraînement électrique selon la revendication 1, **caractérisé en ce que** l'unité de pompage d'huile comprend une pompe à huile mécanique; et
la pompe à huile mécanique est prévue à l'intérieur du carter réducteur et est reliée à l'unité de réducteur pour la transmission.

4. Ensemble d'entraînement électrique selon la revendication 3, **caractérisé en ce que** l'unité de réducteur comprend en outre un arbre intermédiaire (5); et
la pompe à huile mécanique est reliée à l'arbre intermédiaire (5) pour la transmission.

5. Ensemble d'entraînement électrique selon l'une quelconque des revendications 1 à 4, **caractérisé en ce que** l'unité de pompage d'huile comprend une pompe à huile électronique et une unité de commande électronique; et
la pompe à huile électronique est prévue au fond du carter moteur ou du carter réducteur, et l'unité de commande électronique est utilisée pour commander le fonctionnement de la pompe à huile électronique.

6. Ensemble d'entraînement électrique selon la revendication 5, **caractérisé en ce que** l'unité de pompage d'huile comprend en outre plusieurs capteurs de température; et
les capteurs de température sont prévus à l'intérieur du carter moteur et/ou du carter réducteur, et l'unité de commande électronique commande le fonctionnement de la pompe à huile électronique en fonction d'une température détectée par les capteurs de température.

7. Ensemble d'entraînement électrique selon la revendication 5, **caractérisé en ce que** l'unité de pompage d'huile comprend en outre un capteur de vitesse de rotation; et
le capteur de vitesse de rotation est utilisé pour détecter une vitesse de rotation d'un moteur ou d'un réducteur et pour transmettre une vitesse de rotation détectée à l'unité de commande électronique, et l'unité de commande électronique commande le fonctionnement de la pompe à huile électronique en fonction de la vitesse de rotation du moteur ou du réducteur.
